# EUROPÄISCHE PATENTSCHRIFT

(11) **EP 4 493 328 B1**
(45) Veröffentlichungstag und Bekanntmachung des Hinweises auf die Patenterteilung: **04.02.2026**
(21) Anmeldenummer: 23709972.6
(22) Anmeldetag: 06.03.2023
(51) Int. Cl.: B06B 1/02, B29C 65/00, B06B 1/06, B29C 65/08

(54) **SYSTEM ZUR ERZEUGUNG EINER AKUSTISCHEN ULTRASCHALLSCHWINGUNG MIT VERBESSERTER AMPLITUDENREGELUNG**
SYSTEM FOR GENERATING ACOUSTIC ULTRASONIC VIBRATION WITH IMPROVED AMPLITUDE CONTROL
SYSTÈME DE GÉNÉRATION DE VIBRATION ULTRASONORE ACOUSTIQUE À COMMANDE D'AMPLITUDE AMÉLIORÉE

(30) Priorität: 15.03.2022 DE 102022105944
(43) Veröffentlichungstag der Anmeldung: 22.01.2025
(73) Patentinhaber: Herrmann Ultraschalltechnik GmbH & Co. KG, 76307 Karlsbad (DE)
(72) Erfinder: ROUSSEL-GARCIA, Raquel, 75180 Pforzheim (DE); ZINK, Timo, 76139 Karlsruhe (DE); BODE, Robin Alexander, 75180 Pforzheim (DE)
(74) Vertreter: WSL Patentanwälte Partnerschaft mbB
(86) Internationale Anmeldenummer: PCT/EP2023/055584
(87) Internationale Veröffentlichungsnummer: WO 2023/174724

(56) Entgegenhaltungen:
- EP-B1- 2 705 906
- DE-A1- 102010 004 468
- DE-T2- 60 319 101
- ASHLIN: "What is a feedback control system and what are its types?", 31 May 2021 (2021-05-31), https://automationforum.co/, XP093159409, Retrieved from the Internet <URL:https://automationforum.co/what-is-a-feedback-control-system-and-what-are-its-types/>
- ASHLIN: "What is a feedback control system and what are its types? | Instrumentation and Control Engineering", 31 May 2021 (2021-05-31), XP093081084, Retrieved from the Internet <URL:https://automationforum.co/what-is-a-feedback-control-system-and-what-are-its-types/> [retrieved on 20230912]

## Beschreibung

Die vorliegende Erfindung betrifft ein System zur Erzeugung einer akustischen Ultraschallschwingung mit einem Generator zur Erzeugung einer elektrischen Wechselspannung und einem Konverter zur Umwandlung der elektrischen Wechselspannung in eine akustische Ultraschallschwingung. Solche Systeme sind prinzipiell bekannt. Der Konverter weist in der Regel Piezoelemente auf, die eine elektrische Wechselspannung in eine mechanische Schwingung, nämlich eine akustische Schwingung umwandeln. Der Konverter wird häufig mit einer Sonotrode verbunden, die dafür ausgelegt ist, mit einer Ultraschallschwingung angeregt zu werden und diese auf ein zu bearbeitendes Material, mit dem die Sonotrode in Kontakt gebracht wird, zu übertragen.

Der Konverter und die Sonotrode und ein eventuell zwischen Konverter und Sonotrode angeordneter Amplitudentransformator bilden eine Ultraschallschwingeinheit. Sowohl Konverter als auch Sonotrode und gegebenenfalls auch der Amplitudentransformator sind derart aufeinander abgestimmt, dass Sie mit derselben Ultraschallfrequenz in Resonanz versetzt werden können.

Die Sonotrode weist in der Regel eine Siegelfläche auf, die einem Gegenwerkzeug gegenüberliegend angeordnet ist und zur Bearbeitung eines zwischen Sonotrode und Gegenwerkzeug angeordnetem Material vorgesehen ist.

So ist beispielsweise aus der DE 603 19 101 T2 eine Vorrichtung bekannt, bei der eine Materialbahn zwischen einer Sonotrode und einem Gegenwerkzeug hindurch bewegt wird und die Sonotrode während der Bearbeitung mit einer Schweißkraft auf die Materialbahn gedrückt wird. Immer dann, wenn keine Bearbeitung erfolgen soll, wird die Sonotrode von der Materialbahn wegbewegt.

Das regelmäßige Hin- und Wegbewegen der Sonotrode führt jedoch, insbesondere bei sehr hohen Bahngeschwindigkeiten, zu Problemen bei der Materialbahnführung. Zudem lassen sich hohe Bahngeschwindigkeiten nicht verwirklichen, da die Sonotrode nicht schnell genug hin und her bewegt werden kann.

Es ist daher in der DE 10 2017 107 617 A1 bereits vorgeschlagen worden, die Sonotrode nicht mehr von der Materialbahn weg zu bewegen, wenn keine Bearbeitung erfolgen soll, und stattdessen lediglich die Schwingungsamplitude dann, wenn keine Bearbeitung erfolgen soll, zu reduzieren. Somit während eines Schweißintervalls die Sonotrode mit einer höheren Schwingungsamplitude angeregt als während eines Nicht-Schweißintervalls.

Die in der DE 10 2017 617 A1 beschriebene Vorrichtung weist daher eine Regelungseinrichtung auf, die die Schwingungsamplitude Aᵢₛₜ der Ultraschallschwingung erfasst und mit einer gewünschten Schwingungsamplitude Aₛₒₗₗ vergleicht und eine Stellgröße mit dem Ziel verändert, die erfasste Schwingungsamplitude Aᵢₛₜ an die gewünschte Schwingungsamplitude Aₛₒₗₗ anzunähern.

Grundsätzlich kann der Generator, der den Konverter zu Erzeugung der Ultraschallschwingung mit der geeigneten elektrischen Wechselspannung versorgt, während des Intervalls, in dem keine Bearbeitung erfolgen soll, einfach abgeschaltet werden.

Es hat sich jedoch gezeigt, dass ein vollständiges Abschalten der Sonotrode dazu führt, dass beim Wiederanschalten, d.h. zu Beginn des nächsten Intervalls, in dem die Sonotrode die Materialbahn bearbeiten soll, die Zeitdauer, bis zu der sich die Sonotrode wieder im gewünschten eingeschwungenen Zustand befindet, vergleichsweise lang ist, sodass insbesondere bei hohen Bahngeschwindigkeiten der Bereich, in dem noch keine optimale Bearbeitung der Materialbahn erzielt wird, zu lang ist.

Daher ist die gewünschte Schwingungsamplitude Aₛₒₗₗ in den Situationen, in denen keine Verschweißung erfolgen soll, größer als Null, jedoch erheblich kleiner als die gewünschte Schwingungsamplitude Aₛₒₗₗ in den Situationen, in denen eine Verschweißung erfolgen soll.

Allerdings ist bei noch weiterer Steigerung der Bearbeitungsgeschwindigkeit dieses Verfahren bzw. die damit verbundenen schnelle Vergrößerung bzw. Verkleinerung der Schwingungsamplitude nicht möglich, da die Regelung nicht in der Lage ist, die Schwingungsamplitude so schnell an die sich für einen sehr kurzen Moment abrupt ändernde, gewünschte Schwingungsamplitude Aₛₒₗₗ anzupassen.

In der EP 3 174 644 B1 ist eine Vorrichtung beschrieben, bei welcher ein rotierendes, walzenförmiges Gegenwerkzeug Erhebungen aufweist und eine Verschweißung mittels Ultraschall immer nur dann erfolgt, wenn die Erhebungen gegenüber der Sonotrode angeordnet sind. Diese Vorrichtung weist eine Triggervorrichtung, welche die Position der Erhebungen erfasst und eine Regelungsvorrichtung in Abhängigkeit von dem Ergebnis der Erfassung die Regelung entweder ein- oder ausschaltet. Das in der EP 3 174 644 B1 beschriebene Verfahren setzt jedoch das Vorhandensein von entsprechenden Erhebungen voraus. Es ist für Vorrichtungen, die keine Erhebungen aufweisen und für Vorrichtungen, bei denen immer dann, wenn keine Verschweißung bewirkt werden soll, die Schwingungsamplitude reduzieren müssen, nicht geeignet.

Da die bekannten Generatoren die Frequenz f der zu erzeugenden Wechselspannung an die Resonanzfrequenz der anzutreibenden Ultraschallschwingeinheit anzupassen, weisen diese meist ein Frequenzsteuermodul mit einem Frequenzsteuereingang auf, welches die Frequenz f der zu erzeugenden Wechselspannung U in Abhängigkeit von einem am Frequenzsteuereingang anliegenden Signal festlegt.

Die EP 2705906 B1 beschreibt ein Verfahren bei welchem die Erregungsfrequenz eines Ultraschallgenerators derart geregelt wird, dass die Phase der Impedanz des Schwingsystems größer als 0° ist.

Ausgehend von dem beschriebenen Stand der Technik ist es daher Aufgabe der vorliegenden Erfindung, ein System der eingangs genannten Art anzugeben, das die genannten Nachteile zumindest abschwächt und höhere Bearbeitungsgeschwindigkeiten und die damit einhergehenden abrupten Lastwechsel erlaubt.

Erfindungsgemäß wird diese Aufgabe durch ein System nach Anspruch 1 gelöst, in welchem eine Steuereinrichtung vorgesehen ist, die ein Eingangssignal in ein Stellsignal umwandelt, wobei als Eingangssignal die gewünschte Schwingungsamplitude Aₛₒₗₗ vorgesehen ist, und das Stellsignal mit dem Frequenzsteuereingang verbunden ist.

Da das beschriebene Ultraschallschwingsystem auf eine bestimmte Ultraschallfrequenz optimiert ist und eine Resonanz bei dieser Frequenz zeigt, führt eine Anregung bei einer anderen Frequenz zu einer Reduzierung der Ultraschallschwingungsamplitude.

Dadurch, dass erfindungsgemäß als Eingangssignal die gewünschte Schwingungsamplitude Aₛₒₗₗ vorgesehen ist, bewirkt die Steuereinrichtung eine sofortige Änderung der Anregungsfrequenz, wenn sich die gewünschte Schwingungsamplitude Aₛₒₗₗ ändert. Es muss daher nicht darauf gewartet werden, dass die Regeleinrichtung eine Abweichung zwischen Aᵢₛₜ und Aₛₒₗₗ feststellt.

Die abrupte Änderung der gewünschte Schwingungsamplitude Aₛₒₗₗ , wenn während des Schweißvorgangs ein nicht zu verschweißender Bereich des Materials zwischen Sonotrode und Gegenwerkzeug bewegt wird, oder wenn während die Schwingungsamplitude reduziert ist und daher nicht verschweißt wird, ein zu verschweißender Bereich des Materials zwischen Sonotrode und Gegenwerkzeug bewegt wird, stellt eine Störung für das Regelungssystem dar, die diese nicht schnell genug ausregeln kann.

Da allerdings sowohl Zeitpunkt als auch Größe der abrupten Änderung der gewünschte Schwingungsamplitude Aₛₒₗₗ bekannt sind, wird diese Information durch die direkte Verwendung der gewünschte Schwingungsamplitude Aₛₒₗₗ als Eingangssignal der Steuereinrichtung direkt verwendet.

Bei der Einstellung bzw. Programmierung der Steuereinrichtung kann vorab die Differenz zwischen der Frequenz der Ultraschallschwingung, welche während eines Schweißvorgangs verwendet werden soll, und der Frequenz, welche zwischen den Schweißvorgängen, d. h. dann wenn die Sonotrode mit reduzierter Schwingungsamplitude betrieben und das Material nicht schweißen soll, verwendet werden soll, festgelegt oder experimentell bestimmt werden. Die Steuereinrichtung kann dann derart eingestellt werden, dass, wenn der erwartete abrupte Amplitudensprung der gewünschten Schwingungsamplitude Aₛₒₗₗ detektiert wird, das Stellsignal den notwendigen Frequenzsprung, d.h. die bestimmte Frequenzdifferenz reflektiert.

Durch den Eingriff der Steuerungseinrichtung arbeitet das System abrupt mit der neuen Arbeitsfrequenz und aufgrund der Korrelation zwischen Arbeitsfrequenz und Schwingungsamplitude des Schwingungssystems mit der neuen gewünschten Schwingungsamplitude.

Die Regelungseinrichtung muss daher die neuen Arbeitsparameter des Systems nicht einregeln, sondern kann sofort die Regelung in einem nahezu perfekt eingeregelten Zustand fortsetzen.

Die Regelungseinrichtung muss auf alle unvorhergesehenen Störungen im System reagieren. Unvorhergesehene Störungen sind beispielsweise Temperaturänderungen oder Dickenschwankungen innerhalb der zu bearbeitenden Materialbahnen.

Erfindungsgemäß wird als Stellgröße der Regelungseinrichtung die Frequenz der elektrischen Wechselspannung U verwendet. Auch hier muss die Regelungseinrichtung auf alle unvorhergesehenen Störungen im System reagieren.

Es ist in diesem Fall nicht notwendig, die Spannung am Generator zu variieren. Die Ultraschallschwingungsamplitude kann allein über die Veränderung der Frequenz der elektrischen Anregungsspannung erreicht werden.

Dabei ist es erfindungsgemäß weiterhin von Vorteil, wenn die Regelungseinrichtung ein Steuergrößensignal ausgibt, welches mit dem Frequenzsteuereingang verbunden ist. Somit benutzt die Regelungseinrichtung ebenfalls den Frequenzsteuereingang des Frequenzsteuermoduls. So ist es beispielsweise möglich, dass das Steuergrößensignal und das Stellsignal addiert oder das Stellsignal vom Steuergrößensignal subtrahiert wird, und die Summe bzw. die Differenz mit dem Frequenzsteuereingang verbunden ist. Auch in diesem Fall erzeugt die Steuereinrichtung ein Stellsignal, welches lediglich einen Frequenzoffsetwert repräsentiert. Da bereits vor Eintreten der abrupten Änderung der gewünschten Schwingungsamplitude bekannt ist, welcher Änderung der Anregungsfrequenz f notwendig sein wird, wird diese Änderung durch die beschriebene bevorzugte Maßnahme durch die Steuereinrichtung direkt veranlasst, ohne dass die Regelungseinrichtung eine entsprechende Regelaufgabe übernehmen muss.

In einer weiteren bevorzugten Ausführungsform weist der Generator zwei Funktionsmodi auf, wobei in einem ersten Funktionsmodus nur die Regelungseinrichtung verwendet wird und in einem zweiten Funktionsmodus sowohl die Regelungseinrichtung als auch die Steuereinrichtung verwendet wird.

So kann beispielsweise die Steuereinrichtung lediglich während des Schweißintervalls oder lediglich während des Nicht-Schweißintervalls verwendet werden und ansonsten der Regelungseinrichtung etwaig notwendige Eingriffe in das System überlassen.

In einer alternativen Ausführungsform ist daher vorgesehen, dass, wenn die gewünschte Schwingungsamplitude Aₛₒₗₗ während eines vorbestimmten Zeitintervalls konstant bleibt oder sich nicht stärker als ein vorbestimmtes Maß verändert, der erste Funktionsmodus verwendet wird und, wenn während des vorbestimmten Zeitintervalls die gewünschte Schwingungsamplitude Aₛₒₗₗ sich stärker als das vorbestimmte Maß verändert, der zweite Funktionsmodus verwendet wird.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:
Figur 1 eine schematische Darstellung einer Vorrichtung, welche mit dem erfindungsgemäßen System ausgestattet werden kann,
Figur 2 eine schematische Darstellung der Zeitabhängigkeit von Schwingungsamplitude und Kraft und
Figur 3 eine schematische Blockdiagrammdarstellung der der erfindungsgemäßen Regelungseinrichtung.

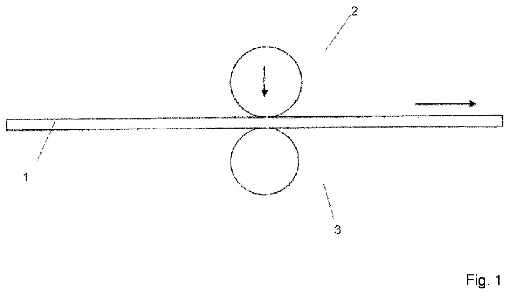

In Figur 1 ist eine schematische Darstellung einer Vorrichtung zum intermittierenden Ultraschallbearbeiten einer Materialbahn gezeigt. Die Materialbahn 1 wird in Pfeilrichtung zwischen einer Sonotrode 2 und einem Gegenwerkzeug 3 hindurch bewegt. Sowohl Sonotrode 2 als auch Gegenwerkzeug 3 sind in dieser Ausführungsform walzenförmig ausgebildet. Die Sonotrode 2 mit einer wird mit einer Kraft F in Richtung auf das Gegenwerkzeug 3 gedrückt, sodass die Materialbahn 1 zwischen Sonotrode 2 und Gegenwerkzeug 3 zusammengedrückt wird.

Um die Sonotrode in eine Ultraschallschwingung zu versetzen, ist sie mit einem Konverter (nicht gezeigt) gekoppelt, welcher eine elektrische Wechselspannung in eine akustische Ultraschallschwingung umwandelt. Zu diesem Zweck wird eine elektrische Wechselspannung von einem Generator (nicht gezeigt) zu dem Konverter übermittelt, welcher die erzeugte akustische Ultraschallschwingung auf die Sonotrode 2 überträgt.

Eine Bearbeitung der Materialbahn 1 erfolgt, wenn die Sonotrode 2 mit der geeigneten Schweißkraft F_{A} auf die Materialbahn gedrückt wird und die Sonotrode mit einer geeigneten Schwingungsamplitude A schwingt.

Es gibt jedoch Anwendungsfälle, in denen nicht die gesamte Materialbahn 1 bearbeitet werden soll, sondern nur abschnittsweise eine Bearbeitung notwendig ist.

In diesen Fällen wird bei der gezeigten Ausführungsform die Schwingungsamplitude der Ultraschallschwingung der Sonotrode immer dann reduziert, wenn keine Bearbeitung erfolgen soll. Die Materialbahn wird zwar auch dann zwischen Sonotrode und Gegenwerkzeug hindurchgeführt, aufgrund der reduzierten Schwingungsamplitude der Ultraschallschwingung kommt es jedoch zu keiner Bearbeitung.

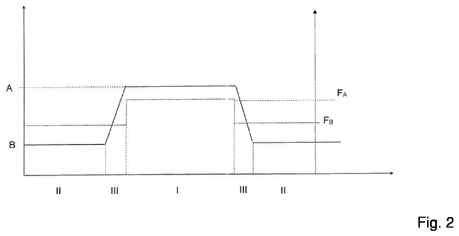

Dies ist schematisch in Figur 2 dargestellt. In dem Diagramm ist sowohl die Schwingungsamplitude (durchgezogene Linie) als auch die Schweißkraft (gepunkteten Linie), mit der die Sonotrode in Richtung des Gegenwerkzeugs gedrückt wird, in willkürlichen Einheiten eingetragen. Man erkennt, dass in einem Intervall I die Schwingungsamplitude den Wert A und die Kraft, mit der die Sonotrode in Richtung Gegenwerkzeug bewegt wird, den Wert F_{A} annimmt. In dem Intervall I findet die eigentliche Bearbeitung statt.

Vor und nach der Bearbeitung im Intervall I ist im Intervall II sowohl die Schwingungsamplitude auf den Wert B als auch die Kraft, mit der die Sonotrode in Richtung Gegenwerkzeug gedrückt wird, auf den Wert F_{B} reduziert. Während des Bewegungsintervalls II findet keine Bearbeitung statt. Zwischen dem Bewegungsintervall II und dem Bearbeitungsintervall I ist hier ein Rampenintervall III eingezeichnet, in dem die Schwingungsamplitude kontinuierlich erhöht bzw. erniedrigt wird.

In diesem Rampenintervall III ist es für herkömmliche Regelungseinrichtungen bei sehr hohen Bahngeschwindigkeiten nicht möglich, schnell genug die Schwingungsamplitude einzuregeln mit der Folge, dass es unter Umständen im Bewegungsintervall II doch zu einer Bearbeitung kommt, was nicht gewünscht ist oder im Bearbeitungsintervall I zu Beginn keine ausreichende Bearbeitung stattfindet.

Daher ist erfindungsgemäß vorgesehen, dass zumindest in dem Rampenintervall III zusätzlich eine Steuereinrichtung eingreift, die gewünschte Schwingungsamplitude Aₛₒₗₗ in ein Stellsignal umwandelt, wobei das Stellsignal mit dem Frequenzsteuereingang des Frequenzsteuermoduls verbunden ist.

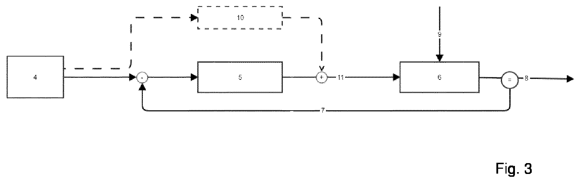

In Figur 3 ist ein beispielhaftes Blockdiagramm einer Ausführungsform des erfindungsgemäßen Systems dargestellt. Die eigentliche Regelstrecke 6 ist üblicherweise einer Störgröße 9 ausgesetzt. Störgrößen können beispielsweise Längenänderungen im System, z.B. aufgrund von Veränderungen der Temperatur sein.

Ein Sollwertgeber 4 gibt in diesem Beispiel die gewünschte Schwingungsamplitude 4 vor. Diese wird mit der tatsächlichen Schwingungsamplitude, d. h. dem IST-Signal 8, welches über das Feed-Back-Signal bereitgestellt wird, verglichen und das Vergleichsergebnis, z.B. als Differenz einem Regelelement 5 zur Verfügung gestellt.

Erfasst das Regelelement 5 eine Abweichung zwischen Soll- und Ist-Wert, wird das Stellsignal 11, welches einem Frequenzsteuereingang der Regelstrecke 6 zur Verfügung gestellt wird, verändert.

So weit beschreibt das Blockdiagramm ein bekanntes Regelverfahren. Allerdings würde auch eine prozessbedingte abrupte Veränderung der SOll-Schwingungsamplitude eine abrupte Signalveränderung am Eingang des Regelelementes zur Folge.

Erfindungsgemäß wird nun die Soll-Amplitude parallel an eine Steuereinheit 10 übermittelt, welche daraus ein Stellsignal berechnet, welches dann zu dem Ausgang des Regelelementes 5 addiert wird, so dass am Frequenzsteuereingang der Regelstrecke 6 die Summe des von der Steuereinheit erzeugten Stellsignals und dem vom Regelelement erzeugten Stellsignals anliegt.

Die prozessbedingte Änderung der Soll-Amplitude, welche vorab bekannt ist, wird somit nicht mehr als Störung ausgeregelt, sondern über die Steuereinheit ausgesteuert. Damit es zu keinem abrupten Eingriff durch das Regelelement 5 kommt, kann entweder i) der Regelparametersatz des Regelelementes 5 für eine relativ träge Regelung sorgen (z. B. im Falle eines PID-Reglers wird der D-Teil reduziert und der I-Teil erhöht), oder ii) das Regelelement 5 bei einer abrupten Änderung der Soll-Amplitude kurzzeitig deaktiviert werden oder iii) das Sollwert-Signal dem Regelelement 5 zu einem etwas späteren Zeitpunkt als der Steuereinheit 10 zur Verfügung gestellt werden, wobei die Größe der Signalverzögerung am Regelelement mit der Totzeit der Regelstrecke korrelieren kann. Im Ergebnis kann die Regelungsqualität des Systems deutlich verbessert werden und das System bei deutlich höheren Bahngeschwindigkeiten eingesetzt werden.

### Bezugszeichenliste

- 1: Materialbahn
- 2: Sonotrode
- 3: Gegenwerkzeug
- 4: Sollwertgeber
- 5: Regelelement
- 6: Regelstrecke
- 7: Feed-Back-Signal
- 8: Ist-Signal
- 9: Störgröße
- 10: Steuereinheit
- 11: Stellsignal
- F: Kraft
- F_{A}: Schweißkraft
- A: Schwingungsamplitude
- I: Intervall
- II: Bewegungsintervall
- III: Rampenintervall

## Patentansprüche

1. System zur Erzeugung einer akustischen Ultraschallschwingung mit einem Generator zur Erzeugung einer elektrischen Wechselspannung U mit einer Frequenz f und einem Konverter zur Umwandlung der elektrischen Wechselspannung in eine akustische Ultraschallschwingung mit einer Regelungseinrichtung (5), die die Schwingungsamplitude Aᵢₛₜ der Ultraschallschwingung erfasst und mit einer gewünschten Schwingungsamplitude Aₛₒₗₗ vergleicht und eine Stellgröße mit dem Ziel verändert, die erfasste Schwingungsamplitude Aᵢₛₜ an die gewünschte Schwingungsamplitude Aₛₒₗₗ anzunähern, wobei der Generator ein Frequenzsteuermodul mit einem Frequenzsteuereingang aufweist, welches die Frequenz f der zu erzeugenden Wechselspannung U in Abhängigkeit von einem am Frequenzsteuereingang anliegenden Signal festlegt, wobei als Stellgröße die Frequenz der elektrischen Wechselspannung verwendet wird und die Regelungseinrichtung ein Steuergrößensignal ausgibt, welches mit dem Frequenzsteuereingang verbunden ist,
**dadurch gekennzeichnet, dass** eine Steuereinrichtung (10) vorgesehen ist, die ein Eingangssignal in ein Stellsignal (11) umwandelt, wobei als Eingangssignal die gewünschte Schwingungsamplitude Aₛₒₗₗ vorgesehen ist, und das Stellsignal (11) mit dem Frequenzsteuereingang verbunden ist.

2. System nach Anspruch 1, **dadurch gekennzeichnet, dass** das Steuergrößensignal und das Stellsignal (11) addiert oder das Stellsignal (11) vom Steuergrößensignal subtrahiert wird, und die Summe bzw. die Differenz mit dem Frequenzsteuereingang verbunden ist.

3. System nach einem der vorherigen Ansprüche, **dadurch gekennzeichnet, dass** der Generator zwei Funktionsmodi aufweist, wobei in einem ersten Funktionsmodus nur die Regelungseinrichtung verwendet wird und in einem zweiten Funktionsmodus sowohl die Regelungseinrichtung als auch die Steuereinrichtung verwendet wird.

4. System nach Anspruch 3, **dadurch gekennzeichnet, dass,** wenn die gewünschte Schwingungsamplitude Aₛₒₗₗ während eines vorbestimmten Zeitintervalls konstant bleibt oder sich nicht stärker als ein vorbestimmtes Maß verändert, der erste Funktionsmodus verwendet wird und, wenn während des vorbestimmten Zeitintervalls die gewünschte Schwingungsamplitude Aₛₒₗₗ sich stärker als das vorbestimmte Maß verändert, der zweite Funktionsmodus verwendet wird.

## Claims

1. A system for generating an ultrasonic acoustic vibration with a generator for generating an alternating electrical voltage U with a frequency f and a converter for converting the alternating electrical voltage into an ultrasonic acoustic vibration with a regulation device (5) which detects the vibration amplitude Aᵢₛₜ of the ultrasonic vibration and compares it with a desired vibration amplitude Aₛₒₗₗ and changes a manipulated variable with the aim of approximating the detected vibration amplitude Aᵢₛₜ to the desired vibration amplitude Aₛₒₗₗ, wherein the generator has a frequency control module with a frequency control input which determines the frequency f of the alternating voltage U to be generated as a function of a signal present at the frequency control input, wherein the frequency of the electrical alternating voltage is used as the manipulated variable and the regulation device outputs a control variable signal which is connected to the frequency control input, **characterised in that** a drive control unit (10) is provided which converts an input signal into a manipulated variable signal (11), the desired vibration amplitude Aₛₒₗₗ being provided as the input signal, and the manipulated variable signal (11) being connected to the frequency control input.

2. The system according to claim 1, **characterised in that** the control-variable signal and the manipulated variable signal (11) are added or the manipulated variable signal (11) is subtracted from the control-variable signal, and the sum or the difference is connected to the frequency control input.

3. The system according to one of the previous claims, **characterised in that** the generator has two operating modes, in which in a first operating mode only the regulation device is used and in a second operating mode both the regulation device and the drive control unit are used.

4. The system according to claim 3, **characterised in that** if the desired vibration amplitude Aₛₒₗₗ remains constant or does not change by more than a predetermined amount during a predetermined time interval, the first operating mode is used and if the desired vibration amplitude Aₛₒₗₗ changes by more than the predetermined amount during the predetermined time interval, the second operating mode is used.

## Revendications

1. Système pour la génération d'une vibration ultrasonore acoustique, comprenant un générateur pour produire une tension alternative électrique U avec une fréquence f et un convertisseur pour convertir la tension alternative électrique en une vibration ultrasonore acoustique comportant un dispositif régulateur (5) qui acquiert l'amplitude de vibration Aᵢₛₜ de la vibration ultrasonore acoustique et la compare avec une amplitude de vibration recherchée Aₛₒₗₗ de la vibration et qui modifit une grandeur de réglage dans le but de rapprocher l'amplitude de vibration Aᵢₛₜ à l'amplitude de vibration recherchée Aₛₒₗₗ, le générateur comprenant un module de commande de fréquence avec une entrée de commande de fréquence, qui détermine la fréquence f de la tension alternative U à produire en fonction d'un signal présent à l'entrée de commande de fréquence, la fréquence de la tension alternative étant utilisée comme grandeur de réglage et le dispositif de réglage émettant un signal de grandeur de réglage qui est rattaché à l'entrée de commande de fréquence,
**caractérisé en ce qu'**un dispositif de commande (10) est prévu qui transforme un signal d'entrée en un signal de réglage (11), l'amplitude de vibration recherchée Aₛₒₗₗ étant prévue comme signal d'entrée et le signal de réglage (11) étant relié à l'entrée de commande de fréquence.

2. Système selon la revendication 1, **caractérisé en ce que** le signal de grandeur de commande et le signal de réglage (11) sont additionnés ou le signal de réglage (11) est soustrait du signal de grandeur de commande et la somme ou respectivement la différence est reliée à l'entrée de commande de fréquence.

3. Système selon l'une des revendications précédentes, **caractérisé en ce que** le générateur comprend deux modes de fonctionnement, dans un premier mode de fonctionnement, seul le dispositif de réglage étant utilisé et dans un deuxième mode de fonctionnement, aussi bien le dispositif de réglage que le dispositif de commande étant utilisés.

4. Système selon la revendication 3, **caractérisé en ce que**, lorsque l'amplitude de vibration recherchée Aₛₒₗₗ reste constante pendant un intervalle de temps prédéterminé ou ne change pas au-delà d'une valeur prédéterminée, le premier mode de fonctionnement est utilisé et lorsque, pendant l'intervalle de temps prédéterminé, l'amplitude de vibration recherchée Aₛₒₗₗ change au-delà de la valeur prédéterminée, le deuxième mode de fonctionnement est utilisé.
